(19) Europäisches Patentamt
European Patent Office
Office européen des brevets

(11) Publication number: **0 165 976**
**B1**

(12) **EUROPEAN PATENT SPECIFICATION**

(45) Date of publication of patent specification: **23.01.91**

(51) Int. Cl.$^5$: **C 08 K 3/20**, C 08 K 5/49, C 08 F 2/00, D 21 H 19/16

(21) Application number: **85900421.0**

(22) Date of filing: **13.12.84**

(86) International application number: **PCT/US84/02052**

(87) International publication number: **WO 85/02857 04.07.85 Gazette 85/15**

(54) **Method for preparing a composite sheet or for paper coating using stable latexes having phosphorous-containing surface groups.**

(30) Priority: **19.12.83 US 562886**
**11.10.84 US 659735**

(43) Date of publication of application:
**02.01.86 Bulletin 86/01**

(45) Publication of the grant of the patent:
**23.01.91 Bulletin 91/04**

(84) Designated Contracting States:
**DE FR GB NL SE**

(56) References cited:
**US-A-3 259 601**
**US-A-3 433 759**
**US-A-3 449 282**
**US-A-3 701 816**
**US-A-3 887 656**
**US-A-3 963 688**
**US-A-4 110 285**
**US-A-4 225 383**
**US-A-4 233 198**
**US-A-28 534 71**

**McCutcheon's Emulsifiers & Detergents, 1982, International Edition, page 168**

(73) Proprietor: **THE DOW CHEMICAL COMPANY**
**2030 Dow Center Abbott Road P.O. Box 1967**
**Midland Michigan 48640-1967 (US)**

(72) Inventor: **GREENE, Bettye, W.**
**5213 Cortland Street**
**Midland, MI 48640 (US)**
Inventor: **CHEN, Sun-Lin**
**2204 Dilloway Street**
**Midland, MI 48640 (US)**

(74) Representative: **Casalonga, Axel et al**
**BUREAU D.A. CASALONGA - JOSSE**
**Morassistrasse 8**
**D-8000 München 5 (DE)**

**EP 0 165 976 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a modified latex having phosphorus-containing surface groups. This modified latex is useful as a coating for substrates and as a binder in aqueous systems containing inorganic fillers commonly employed in paper coatings, carpet backing, wallboards and other substrates.

In general mineral coatings or fillers are applied to paper to cover the individual fibers of the paper and fill interstices between fibers, thus rendering the surfaces of the paper more level and uniform in texture. Mineral coatings or fillers are also employed in aqueous dispersions of fiber to form a composite sheet. This process is described in U.S. Patent No. 4,225,383.

US—A—4 110 285 relates to a latex prepared by polymerizing one or more olefinically unsaturated monomers dispersed in water in the presence of an emulsion stabilizer. Said stabilizer is a mixture of phosphate esters having C=C bonds in the molecule through which said stabilizer is incorporated into the polymer. US—A—4 110 285 does not disclose the preparation of fiber and filler containing composite sheets or of inorganic filler containing paper coatings.

In order to suitably bind the mineral coatings or fillers to the substrate, latexes are employed. Latexes bind the filler such that it will not be removed by the pull of printing ink. Besides printability, the latexes also help to influence many other qualities of the paper such as appearance and strength.

The ability of the latex to function as a binder is very important to the final quality of the finished substrate, such as dry and wet pick in paper coatings. Generally in the art of paper coating, the latex component is admixed with a filler in an aqueous suspension and mechanically applied to the substrate to be coated. Alternatively, in the art of composite sheet formation, a latex is added to an aqueous dispersion of fiber and inorganic filler which is destabilized to form a fibrous agglomerate which is deposited onto a screen or other porous means to form a sheet therefrom.

For various reasons, it is desirable to maximize the retention level of inorganic fillers on the substrate to be coated. One way to accomplish this is to use a latex which interacts well with the filler. Improved interaction increases filler retention which has the benefits of reducing the level of flocculant required to destabilise the filler from solution and of reducing the stickiness of the filler and latex to equipment which occurs when high flocculant levels are used. This, in turn, reduces the maintenance needed in the manufacture of composite sheets. The latter benefit is also realized with respect to cleaning up residual filler left behind in the aqueous solution by the latex after deposition. Another advantage to increasing filler retention and thereby filler content is, of course , economical, as higher filler content usually translates to less expensive final products.

It is well known in the art, however, that while a particular amount of filler can enhance the properties of a coated product or composite sheet, higher amounts can cause loss of strength due to decreased structural integrity. It, therefore, would be desirable to develop a method to increase filler retention without reducing physical properties or ideally to increase the strength of substrates with higher filler levels. Accordingly, it would be desirable to develop a latex which had improved interaction with inorganic fillers to enable better retention of the fillers.

The present invention further provides a method for preparing a composite sheet comprising the steps of:

I (a) adding to an aqueous dispersion comprising a water-dispersible fiber and an inorganic filler, from 2 to 30 percent based on the weight of the dispersion, of a latex composition comprising at least one ethylenically unsaturated monomer which is emulsion polymerized to form a latex, and a $—PO(O)_2$ surface group which is intimately bound to the surface of said latex, said intimate bond being obtained by polymerizing a polymerizable phosphorus-containing monomer into the latex polymer such that said group is not desorbed into an aqueous medium on diluting or formulating said latex, and optionally a phosphate ester surfactant being present;

(b) colloidally destabilizing the resulting mixture to form a fibrous agglomerate in aqueous suspension;

(c) distributing and draining said aqueous suspension on a porous support to form a wet web; and

(d) drying said web to form a sheet.

The present invention further provides a method of paper coating comprising the steps of:

(1) adding to an aqueous dispersion of at least one inorganic filler, from 2 to 30 percent based on the weight of the dispersion of a latex composition comprising at least one ethylenically unsaturated monomer which is emulsion polymerized to form a latex, and $—PO(O)_2$ surface group which is intimately bound to the surface of said latex, said intimate bond being obtained by polymerizing a polymerizable phosphorus-containing monomer into the latex polymer such that said group is not desorbed into an aqueous medium on diluting or formulating said latex, and optionally a phosphate ester surfactant being present; and

(2) mechanically applying the mixture to the substrate to be coated.

The modified latex of the subject invention can be employed in the formation of composite sheets or as the latex component in a latex coating composition. Generally, the modified latex is formed by using typical latex formulations and methods known in the art with the exception that a phosphorus-containing compound is emulsion copolymerized with the conventional latex monomers such that $—PO(O)_2$ groups become intimately bound to the surface of the latex particles.

The conventional monomers suitable for the practice of this invention with regard to the latex

component comprise ethylenically unsaturated synthetic monomers known in the art. The ethylenically unsaturated monomers are of the general formula $CH_2=CHR$ wherein R is H, alkyl, aryl, nitrile ester, acid or halogen. The preferred monomers are styrene, butadiene, butyl acrylate and other acrylic esters, vinylidene chloride, vinyl chloride, vinyl acetate and combinations thereof. Poly(styrenebutadiene) is a preferred latex polymer.

The phosphorus-containing compounds employed in the practice of this invention generally comprise those compounds containing a $—PO(O)_2$ group. Preferred phosphorus-containing compounds are of the general structural formula:

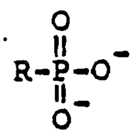

(I)

where R can be a radical such as alkyl, alkylphenyl, alkylamine, fatty alcohol, fatty acid, glycol, polyglycol. However, the principal constituent is the $—PO(O)_2$ group of the phosphorus-containing compound. Therefore, the range of phosphorus containing compounds which can be employed is large.

Those latex compositions which have the $—PO(O)_2$ group intimately bound to the surface of the latex (i.e. to the latex particle's surface) are deemed to be within the scope of this invention. "Intimately bound" to the surface of the latex means chemically bound, such as by covalent bonding, such that the $—PO(O)_2$ group is not desorbed into aqueous medium on diluting or formulating the latex with other components. The phosphorus containing group is irreversibly bound to the latex surface.

Exemplary of the phosphorus-containing compounds are derivatives of phosphoric acid; salts of phosphoric acid esters such as alkylphosphates and alkylphenyl phosphates; phosphorus-containing quaternary ammonium surfactants; phosphorus-containing fluoroalcohol based surfactants; derivatives of polyphosphoric acid such as $Na_5R_5(P_3O_{10})_2$ where R is either 2-ethylhexyl or capryl; polymerizable phosphonic acid and phosphoric acid monomers and/or polymerizable, monomeric derivatives thereof such as $PO(OH)_2CH_2N(CH_2CHCH_2)_2$; free radical initiators such as $K_4P_2O_8$ (potassium peroxydiphosphate) which can give rise to bound $PO(OH)_2$ groups on the surface of the latex particles; and phosphated polyethylene oxide esters.

In general, a phosphate ester surfactant compound can be used which is a mono-, di-, or tri-ester having the following general structural formulas:

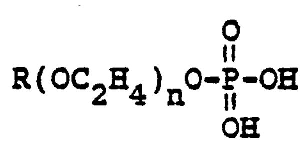

(II)

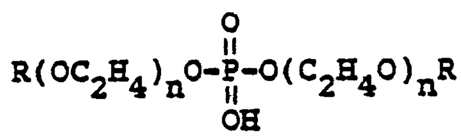

(III)

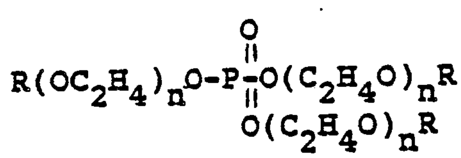

(IV)

wherein R is an alkyl, alkylphenol, alkylamine, fatty acid, fatty alcohol, glycol or polyglycol and n is greater than 3. One such phosphate ester family would be a phosphated nonylphenol alkoxylate; in particular, a phosphated nonylphenol ethoxylate. A suitable phosphate ester surfactant compound is commercially available through the GAF Corporation under the trade name GAFAC®.

The GAFAC® surfactants are complex phopshate esters of nonionic surfactants of the ethylene oxide-adduct type. These anionic products are mixtures of mono- and diesters. They are soluble and compatible in solutions of electrolytes and maintain emulsifying properties over a broad pH range.

The modified latex of the subject invention is prepared such that the latex particle has $—PO(O)_2$ groups copolymerized or bound to its surface. One advantage of the copolymerized groups, besides the obvious enhancement of latex stability, is that they are irreversibly attached to the latex particle surface and as such are not desorbed into the aqueous medium on diluting or formulating the latex with other components. This latter characteristic is particularly important inasmuch as it is this copolymerized or bound $—PO(O)_2$ surface group which causes the desired interaction between the latex and fillers with multi-valent ions to occur.

The emulsion polymerization of the phosphate modified latex of the subject invention can be performed using techniques generally recognized in the art. Free radical polymerization initiators can be employed, such as persulfates and peroxydiphosphates. The latter initiator is particularly useful because it provides a means to obtain the copolymerized or bound $—PO(O)_2$ surface groups pertinent to this invention. Chain transfer agents such as carbon tetrachloride and t-dodecyl mercaptan, and seed latexes such as a styrene/acrylic acid can also be employed. The introduction of a seed latex has been found desirable to control particle size and surface area for the incorporation of the desired amount of phosphorus-containing compound.

In general, the emulsion polymerization may be effected by introducing a mixture of the latex monomer(s) and the phosphorus-containing compound in appropriate proportions into an aqueous solution containing the seed, initiator and chain transfer agent. In particular, the phosphorus-containing compound comprises from 2 to 15 parts per hundred parts latex polymer prepared (phr) in the total mixture, more preferably, from 3 to 8 phr.

It is possible, and in some situations desirable, to use two of the types of phosphorus-containing compounds, one being a polymerizable compound such as a comonomer which becomes covalently bonded in the latex polymer and the other being a compound which becomes physically bound in the latex polymer such as phosphate ester surfactant compound. In particular, it has been found desirable for paper coating compositions according to the present invention which comprise phosphate ester surfactant compounds physically bound in the latex to also contain an amount of a polymerizable monomer, polymerized into the latex polymer which monomer provides a surface $—PO(O)_2$ group. Such combination provides better, more uniform coatings in some coating processes. An α,β-ethylenically unsaturated carboxylic acid also can be used in place of the polymerizable phosphorus-containing monomer when prepared coating compositions employing the phosphate ester surfactant compounds.

Preferably, when the phosphorus-containing compound is a comonomer polymerized into the latex polymer and is used in combination with a phosphate ester surfactant compound, the latex polymer will contain from 0.5 to 5.0 percent by total weight polymer of the phosphorus-containing comonomer, more preferably from 1.0 to 3.0 percent by weight. When an α,β-ethylenically unsaturated carboxylic acid comonomer is polymerized into the latex polymer, similar amounts should be used.

The following examples are given to more clearly illustrate the preparation of the phosphate modified latex of this invention to those skilled in the art and are not for purposes of limitation. Parts are by total weight polymer.

Example I

A phosphate modified latex was prepared from the following constituents:

| | Parts |
|---|---|
| Water | 118.00 |
| Carbon tetrachloride | 4.00 |
| Sodium hydroxide (10%) | 0.15 |
| Sodium persulfate | 1.00 |
| Seed latex (styrene/acrylic acid) | 1.56 |
| Styrene | 60.00 |
| Butadiene | 40.00 |
| Phosphated alkylphenol ethoxylate | 3.00 |

After the constituents had been charged to a polymerization vessel, the resulting aqueous composition was heated to 90°C for 45 minutes with mixing and polymerized for 4 hours. A stable phosphated latex containing 43.93 percent solids was obtained thereby.

Example II

A phosphate modified latex was prepared with the addition of a phosphonate derivative comonomer with the following constituents:

| | Parts |
|---|---|
| Water | 118.00 |
| Carbon tetrachloride | 4.00 |
| Sodium hydroxide (10%) | 0.15 |
| Sodium persulfate | 1.00 |
| Seed latex (styrene/acrylic acid) | 0.66 |
| Styrene | 56.72 |
| Butadiene | 40.00 |
| Phosphated alkylphenol ethoxylate | 2.00 |
| Phosphonate comonomer $PO(OH)_2CH_2N(CH_2CHCH_2)_2$ | 3.28 |

The constituents were charged to a polymerization vessel and heated to 90°C for 45 minutes with mixing and polymerized for 4 hours. A stable latex containing 45.95 percent solids was obtained thereby.

Example III

A phosphorus-modified latex containing a phosphate ester surfactant compound was prepared with the addition of an acrylic acid comonomer with the following constituents:

| | Parts |
|---|---|
| Water | 118.00 |
| Carbon tetrachloride | 4.00 |
| Sodium hydroxide (10%) | 0.15 |
| Sodium persulfate | 1.00 |
| Seed latex (styrene/acrylic acid) | 0.66 |
| Styrene | 58.75 |
| Butadiene | 40.00 |
| Phosphated alkylphenol ethoxylate | 2.00 |
| Acrylic acid | 1.25 |

After the constituents had been charged to a polymerization vessel, the resulting aqueous composition was heated to 95°C for 45 minutes with mixing and polymerized for 4 hours. A stable phosphated latex composition was obtained thereby.

The phosphate modified latexes as prepared above can be readily employed in paper coating and composite sheet formation. In particular, the phosphate modified latexes are useful in binding inorganic fillers as are commonly employed in paper manufacturing.

In particular, the subject latexes have found utility as binders for divalent and trivalent metal ions which are present in inorganic fillers. The inorganic fillers are present in aqueous dispersions in amounts of from 40 to 85 percent by weight. Inorganic fillers with multivalent ions are preferred. The inorganic fillers can be chosen from those well known in the paper coating art. Especially applicable are those fillers such as clay, calcium carbonate, talc, mica, magnesium hydroxide or oxide, zinc oxide, gypsum, dolime, zincite, wallastonite, satin white, barytes, titanium dioxide and aluminum trioxide.

The application of a filler and the phosphate modified latex as a binder in paper manufacture has been

found to provide excellent, uniform film coverage, i.e., an even distribution of pigment and latex on the fibers, significantly lower flocculant demand, and higher wet and dry sheet strength.

Alternatively, the phosphate modified latex may be utilized as a coating on nonporous substrates such as cans and the like to prevent corrosion.

With respect to paper manufacturing, the phosphate modified latex is particularly adaptable for use as the latex component in a composite sheet method of manufacture. This product and process is described in U.S. Patent No. 4,225,383, In such a process, a water-dispersible fiber; a film-forming water insoluble, organic polymer latex of this invention is an amount of from 2 to 30 percent by weight, more perferably from 3 to 15 percent; and a finely divided, substantially water-insoluble non-fibrous, inorganic filler are used to form a sheet therefrom. U.S. Patent 4,225,383 additionally requires in the preferred process a flocculating agent. However, due to the inherent flocculating characteristic of the phosphate modified latex, a much reduced load of flocculating agent is required when the latex of the subject invention is employed. This characteristic is due to the bound $—PO(O)_2$ groups which allow the modified latex particle to be destabilized much easier than a conventional latex particle in the presence of fillers with multi-valent ions. Further, when the present latex is employed, much higher filler levels are obtained in the composite sheet due to the interaction between the $—PO(O)_2$ group and the filler.

More specifically when an inorganic filler containing divalent or trivalent metal ions is employed, the $—PO(O)_2$ groups have been found to interact with them. This interaction has been demonstrated by measuring the sedimentation volume of an inorganic filler in water. For example, 20 g of $CaCO_3$ were added to a graduated cylinder and diluted to 100 ml with water. After equilibrating for 2 hours, the amount of sediment that accumulated in the bottom of the cylinder was approximately 17.5 ml. In another graduated cylinder 20 g of $CaCO_3$ were diluted to 100 ml with water and 1 g of a $—PO(O)_2$ group-containing latex was added. Again, after equilibrating for 2 hours, the sediment volume was measured. This time the sediment volume was approximately 42 ml. This increased volume can be attributed to an interaction between the $CaCO_3$ and the phosphate modified latex.

Composite sheets were prepared using a control latex comprising 70 parts of a latex of 54 weight percent styrene/45 weight percent butadiene/1 weight percent fumaric acid and 30 parts of a latex of 75.5 weight percent styrene/19.5 weight percent butadiene/4 weight percent hydroxylethyl acrylate/1 weight percent fumaric acid and using the modified latex of the present invention. The percent retention of filler was calculated for both latexes.

Various fibers were also employed to determine the effect of the $—PO(O)_2$ group-modified latex with respect to retention of the filler. All tests were conducted on a basic formula of 45 percent fiber, 50 percent filler ($CaCO_3$), and 5 percent latex. The modified latex formulation employed was from Example II disclosed hereinabove.

The results obtained are tabulated in Table I.

TABLE I

| Fiber | Percent Filler Retention: Control Latex[1] | Percent Filler Retention: Phosphate Modified Latex[2] |
|---|---|---|
| Bleached Kraft 50% Softwood/50% Hardwood | 82* | 93 |
| Bleached Kraft Hardwood | 88* | 95 |
| Bleached Kraft Softwood | 84* | 94 |
| Bleached Sulfite Softwood | 91* | 94 |
| Unbleached Kraft Softwood | 88* | 96 |

*Not Examples of the present invention.

[1]Latex blend containing 70 parts (54 styrene/45 butadiene/1 fumaric acid) and 30 parts (75.5 styrene/19.5 butadiene/4 hydroxylethyl acrylate/1 fumaric acid).

[2]Latex of 56.72 styrene/40 Butadiene/3.28 comonomer containing $-PO(O)_2$ group as described in Example II.

Immediately observable from Table I is that the modified latex according to the present invention showed a higher filler retention level than the control latex and also showed a more consistent percentage of filler retention independent of the particular fiber employed.

Additional testing was conducted with the modified latexes to determine their self-flocculating characteristic. Usually the preferred process for forming a composite sheet employs a flocculant which has an opposite charge to the ionic stabilization of the latex in order to cause the latex to become colloidally destabilized. However, the subject modified latex has been shown to require less flocculant load while exhibiting excellent filler retention.

While the flocculating characteristic of the modified latex is especially beneficial in composite sheet manufacture, this inherent destabilizing tendency is not entirely beneficial in a paper coating latex. A paper coating latex instead is generally known in the art to need a certain degree of stabilization in the presence of inorganic fillers in order to effectively employ it in paper coating operations.

As is well known, paper coating compositions comprise pigments which are inorganic fillers and an adhesive material which consists of a synthetic latex. This latex composition is applied to the paper by conventional means such as letterpress print roll coater, offset roll coater, size press, air knife and blade coater. After application, the latex composition is dried by any convenient method such as by a current of air and more usually by heated air. The latex employed must exhibit a degree of stability in order to provide a homogeneous aqueous dispersion while it is maintained on a particular coating apparatus.

It has been found that when only the phosphate ester type surfactant compound is used in the manufacture of the subject latex the resulting aqueous dispersion may be too destabilized for convenient use as a paper coating binder. However, when the phosphate ester surfactant compound is used in conjuction with a latex containing certain ethylenically unsaturated comonomers polymerized therein, as described above, the resulting latex dispersion becomes sufficiently stabilized to be employed as a paper coating composition. The preferred ethylenically unsaturated comonomers are an α,β-ethylenically unsaturated carboxylic acid or a copolymerizable phosphonic acid derivative. The more preferred α,β-ethylenically unsaturated carboxylic acids being fumaric acid and acrylic acid. Acrylic acid being the most preferred.

A further discovery with respect to the latex containing both phosphate ester surfactant compounds and coplymerized monomers having $—PO(O)_2$ groups is that the increased stabilization provides excellent sheet strength despite the increased filler retention. This phenomena is attributed to an optimized flocculation rate which is sufficient to allow a more uniform arrangement of the latex/inorganic filler units. Thus, the more symmetrical packing would have greater structural integrity than a more random or porous packing which would result from a rapidly flocculating system.

Paper composites formed from copolymer latexes with bound $—PO(O)_2$ surface groups exhibit increased retention of the inorganic filler with little loss in internal bonding strengths of the paper specimen. This would not be expected in view of the increased filler levels present. With typical latex compositions, depending on the filler type, there can be an improvement in strength at low filler levels as the filler content increases. However, as the optimum amount of filler is exceeded there is a very extreme reduction in strength.

**Claims**

1. A method for preparing a composite sheet comprising the steps of:

(a) adding to an aqueous dispersion comprising a water-dispersible fiber and an inorganic filler, from 2 to 30 percent based on the weight of the dispersion, of a latex composition comprising at least one ethylenically unsaturated monomer which is emulsion polymerized to form a latex, and a $—PO(O)_2$ surface group which is intimately bound to the surface of said latex, said intimate bond being obtained by polymerizing a polymerizable phosphorus-containing monomer into the latex polymer such that said group is not desorbed into an aqueous medium on diluting or formulating said latex, and optionally a phosphate ester surfactant being present;

(b) colloidally destabilizing the resulting mixture to form a fibrous agglomerate in aqueous suspension;

(c) distributing and draining said aqueous suspension on a porous support to form a wet web; and

(d) drying said web to form a sheet.

2. A method of paper coating comprising the steps of:

(1) adding to an aqueous dispersion of at least one inorganic filler, from 2 to 30 percent based on the weight of the dispersion of a latex composition comprising at least one ethylenically unsaturated monomer which is emulsion polymerized to form a latex, and a $—PO(O)_2$ surface group being a phosphorus containing group which is intimately bound to the surface of said latex, said intimate bond being obtained by polymerizing a polymerizable phosphorus-containing monomer into the latex polymer such that said group is not desorbed into an aqueous medium on diluting or formulating said latex, and optionally a phosphate ester surfactant being present; and

(2) mechanically applying the mixture to the paper to be coated.

3. A method according to claim 1 characterized in that the latex composition is used in an amount of from 3 to 15 wt.%.

4. A method according to claim 1 or 2 characterized in that when a phosphate ester surfactant is present the phosphorus-containing monomer is present in an amount ranging from 0.5 to 5.0, preferably from 1.0 to 3.0% by total weight of the polymer.

**Patentansprüche**

1. Verfahren zum Herstellen eines Verbundstoffblatts, umfassend die Schritte:

(a)Zugeben zu einer wässrigen Dispersion, die eine Wasser-dispergierbare Faser und einen anorganischen Füllstoff enthält, von 2 bis 30 Prozent auf Gewichtsbasis der dispersion einer Latex-Zusammensetzung, die mindestens ein ethylenisch ungesättigtes Monomer, das zur Bildung eines Latex emulsionspolymerisiert ist, und eine —$PO(O)_2$ Oberflächengruppe enthält, die fest an die Oberfläche des Latex gebunden ist, wobei diese feste Bildung durch Polymerisieren eines polymerisierbaren, Phosphor-haltigen Monomers in das Latex-Polymer erhalten wird, so daß die Gruppe nicht bei Verdünnen oder Formulieren des Latex in ein wässriges Medium desorbiert wird, und gegebenenfalls ein oberflächenaktiver Phosphatester vorhanden ist;

(b) kolloidales Destabilisieren des resultierenden Gemisches, um ein faserförmiges Agglomerat in wässriger Suspension zu bilden;

(c) Verteilen und Entwässern der wässrigen Suspension auf einem porösen Träger, um eine feuchte Bahn zu bilden und

(d) Trocknen der Bahn, um ein Blatt zu bilden.

2. Verfahren zum Beschichten von Papier, umfassend die Schritte:

(1) Zugeben zu einer wässrigen Dispersion mit mindestens einem anorganischen Füllstoff von 2 bis 30 Prozent auf Gewichtsbasis der Dispersion einer Latex-Zusammensetzung, die mindestens ein ethylenisch ungesättigtes Monomer, das zur Bildung eines Latex emulsionspolymerisiert ist, und eine —$PO(O)_2$ Oberflächengruppe enthält, wobei die Oberflächengruppe eine fest an die Oberfläche des Latex gebundene Phosphor-haltige Gruppe ist, wobei diese feste Bildung durch Polymerisieren eines polymerisierbaren, Phosphor-haltigen Monomers in das Latex-Polymer erhalten wird, so daß die Gruppe nicht bei Verdünnen oder Formulieren des Latex in ein wässriges Medium desorbiert wird, und gegebenenfalls ein oberflächenaktiver Phosphatester vorhanden ist;

(2) mechanisches Aufbringen des Gemisches auf das zu beschichtende Papier.

3. Verfahren nach Anspruch 1, dadurch gekennzeichnet, daß die Latex-Zusammensetzung in einer Menge von 3 bis 15 Gew.-% verwendet wird.

4. Verfahren nach Anspruch 1 oder 2, dadurch gekennzeichnet, daß bei Anwesenheit eines oberflächenaktiven Phosphatesters das Phosphor-haltige Monomer in einer Menge vorhanden ist, die von 0,5 bis 5,0, vorzugsweise von 1,0 bis 3,0% bezogen auf das Polymer-Gesamtgewicht reicht.

**Revendications**

1. Procédé de préparation d'une feuille composite, comprenant les étapes consistant à:

(a) ajouter, à une dispersion aqueuse comprenant des fibres dispersables dans l'eau et une charge minérale, de 2 à 30%, par rapport au poids de la dispersion, d'une composition de latex comprenant au moins un monomère à insaturation éthylénique, qui est polymérisé en émulsion pour former un latex, et un groupe superficiel —$PO(O)_2$, lié intimement à la surface dudit latex, ladite liaison intime étant obtenue par introduction, par polymérisation, d'un monomère phosphoré polymérisable dans le polymère du latex, de façon que ledit groupe ne soit pas désorbé dans un milieu aqueux à la suite de la dilution ou de la formulation dudit latex, un ester phosphate tensioactif étant éventuellement présent;

(b) déstabiliser par voie colloïdale le mélange résultant pour former un agglomérat fibreux en suspension aqueuse;

(c) répartir et drainer laidite suspension aqueuse sur un support poreux pour former une bande humide; et

(d) sécher ladite bande pour former une feuille.

2. Procédé de couchage du papier comprenant les étapes consistant à:

(1) ajouter, à une dispersion aqueuse d'au moins une charge minérale, de 2 à 30%, par rapport au poids de la dispersion, d'une composition de latex comprenant au moins un monomère à insaturation éthylénique, qui est polymérisé en émulsion pour former un latex, et un groupe superficiel —$PO(O)_2$, intimement lié à la surface dudit latex, ladite liaison intime étant obtenue par introduction, par polymérisation, d'un monomère phosphoré polymérisable dans le polymère du latex, de façon que ledit groupe ne doit pas désorbé dans un milieu aqueux à la suite de la dilution ou de la formulation dudit latex, un ester phosphate tensioactif étant éventuellement présent; et

(2) appliquer mécaniquement le mélange au substrat à coucher.

3. Procédé selon la revendication 1, caractérisé en ce que la composition de latex est utilisée en une quantité valant de 3 à 15% en poids.

4. Procédé conforme à la revendication 1 ou 2, caractérisé en ce que, quand un ester phosphate tensioactif est présent, le monomère phosphoré est présent en une quantité allant de 0,5 à 5,0%, de préférence de 1,0 à 3,0% par rapport au poids total du polymère.